Europäisches Patentamt

**European Patent Office**

Office européen des brevets

Publication number: **0 313 234 B1**

# EUROPEAN PATENT SPECIFICATION

Date of publication of patent specification: **12.08.92**   Int. Cl.5: **A23L 1/236**, A23L 2/26

Application number: **88309304.9**

Date of filing: **06.10.88**

Sucralose compositions.

Priority: **06.10.87 GB 8723423**

Date of publication of application:
**26.04.89 Bulletin 89/17**

Publication of the grant of the patent:
**12.08.92 Bulletin 92/33**

Designated Contracting States:
**AT BE CH DE ES FR GR IT LI LU NL SE**

References cited:
EP-A- 0 103 479
EP-A- 0 131 640
GB-A- 1 543 167
GB-A- 2 098 848
US-A- 4 495 170

Proprietor: **TATE & LYLE PUBLIC LIMITED COMPANY**
**Sugar Ouay Lower Thames Street**
**London, EC3R 6DO(GB)**

Inventor: **Beyts, Pamela Kay**
**11 Tamarisk Avenue**
**Reading Berkshire(GB)**

Representative: **Ablewhite, Alan James et al**
**MARKS & CLERK 57/60 Lincoln's Inn Fields**
**London WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

This invention relates to compositions of the high intensity sweetener sucralose with saccharide sweeteners, the compositions exhibiting synergy.

Sucralose, 4,1′,6′-trichloro-4,1′,6′-trideoxy-galactosucrose, is a high intensity sweetener disclosed in British Patent No. 1543167. Sucralose is known to provide marked synergy to compositions also containing certain other high intensity sweeteners having an accompanying bitter taste, in particular saccharin, acesulfame-K and stevioside (GB 2098848B; US 4,495,170) and to compositions containing cyclamate (GB 2154850B). No significant synergy is found in compositions containing sucralose and aspartame, although the quality of sweetness is improved (GB 2153651B). Furthermore, no synergy is found in combinations of sucralose and sucrose.

From these findings, it might be concluded that synergy between sucralose and other sweeteners is rather specific. However, we have now found that sucralose also exhibits synergy with certain saccharides, in some cases to a considerable degree.

The saccharides in question are fructose, glucose, maltose and other gluco-oligosaccharides, and mixtures of these components such as invert sugar, high fructose corn syrups, and starch-derived glucose syrups, and sugar alcohols, especially monosaccharide sugar alcohols such as xylitol, sorbitol and mannitol.

The scale of synergy is surprisingly high considering that with sucrose there is no significant synergy at all. Thus, pure fructose can be potentiated with a synergy (i.e. increased sweetening power) of about 33%. With invert sugar (i.e. glucose + fructose, 1:1) the synergy is about 21%, while with high fructose corn syrup (42% fructose, dry solids basis), the synergy is about 11%.

According to the present invention there is provided a sweetening composition comprising sucralose and a saccharide sweetener selected from fructose, glucose, invert sugar, starch derived glucose syrups, high fructose corn syrups and sugar alcohols, the relative sweetness contribution provided by the sucralose and the saccharide sweetener being from 5:1 to 1:5.

According to a further feature of the present invention there is provided a method of sweetening an oral composition other than chewing gum comprising incorporating therein sucralose and a saccharide sweetener selected from the group consisting of fructose, glucose, invert sugar, starch derived glucose syrups, high fructose corn syrups and sugar alcohols, such that the relative sweetness contribution provided by the sucralose and the saccharide sweetener is from 5:1 to 1:5, and preferably from 3:1 to 1:3, most preferably about 1:1. By term 'oral composition' we mean any substance intended to be taken into the mouth. The term includes ingestible compositions such as foodstuffs, medicaments, confectionery, beverages etc. and also non-ingested materials such as mouthwashes and toothpaste.

According to a further feature of this invention there is provided an oral other than chewing gum composition sweetened with a sweetening composition as defined above. Examples of such compositions include, in particular, soft drinks (cola, carbonated fruit drinks etc), confectionery, baked goods and dietetic foods (containing sorbitol).

The synergy levels quoted above are the increased sweetening power per unit weight obtained for the composition as a percentage of the expected degree of sweetening power (i.e. the sum of the sweetening power theoretically provided by each of the sweeteners). An alternative and more useful measure of synergy is the percentage saving, that is to say the difference between the amount actually needed to obtain a certain degree of sweetness and the theoretical amount needed expressed as a percentage of the theoretical amount needed. On this basis the saving with fructose is about 25% and with invert sugar is about 18%.

The synergy of sucralose with fructose and with fructose-glucose mixtures is particularly useful in the formulation of soft drinks where fructose is a highly desirable sweetener on account of its flavour and mouthfeel properties. Combinations with sucralose enable the calorie level to be markedly reduced and the synergy enables the amount of fructose and sucralose to be reduced below the expected levels.

In general, the synergy between sucralose and the saccharide or saccharide mixture will extend over a range of sucralose to saccharides providing a relative sweetness contribution of 4:1 to 1:4. In plain water this sweetness contribution range relates for fructose to a weight ratio of 1:140 to 1:2300. However, in foods and beverages other components influence the expression of sweetness, particularly in the case of sucralose itself. Thus, for example, although in water a solution of 0.00842% sucralose is equisweet with 5% sucrose, in a typical cola formulation a concentration of 0.012% sucralose is required for the same degree of sweetness. This means that the weight ratio for a 50:50 sweetness contribution for the two sweeteners will vary from the value in water, depending on the nature of the foodstuff or beverage. Typical ratios are as follows:

| Ratio by weight | | | | |
|---|---|---|---|---|
| (50/50 sweetness) | water 5% sucrose equiv. | cola or lemonade 10% sucrose equiv. | instant lemon tea 3.5% sucrose equiv. | strawberry milk drink 2.5% sucrose equiv. |
| (a) | 1:576 | 1:390 | 1:384 | 1:439 |
| (b) | 1:693 | - | - | - |
| (a) = sucralose:fructose | | | | |
| (b) = sucralose:fructose + dextrose monohydrate | | | | |

The following examples illustrate the invention:

Example 1

Measurement of synergy

Synergy was measured by determining the concentration of each sweetener or sweetener combination having the same degree of sweetness as sucrose at a given concentration i.e. the equisweet point.

The materials used were as follows:

| | |
|---|---|
| Sucrose | - Tate & Lyle granulated |
| Fructose | - Fructofinn, Finn Sugar Co. |
| Glucose | - Dextrose Monohydrate (DMH) Koch Light Ltd |
| High Fructose Corn Syrup | - 42% High Fructose Corn Syrup (HFCS), Isosweet 351, Tunnel Refinery |
| Glucose Syrup | - 42 DE acid converted glucose syrup, Globe (registered Trade Mark) 01132, CPC |
| Invert | - Fructofinn/D-glucose (Fisons A.R.) 50/50 w/w |
| Sucralose | - Tate & Lyle Speciality Sweeteners, |
| Xylitol | - F.R. Benson and Partners |
| Mannitol | - Zimmerman Hobbs |
| Sorbitol | - Chemical Exchange |

All sweeteners were prepared as solutions in tap water (pH 8±1) and served at a temperature of approximately 20°C. All concentrations are expressed as % (w/v).

The standard was a 5% solution of sucrose (Tate & Lyle granulated sugar in Reading tap water, pH about 8.0). The concentrations of sucralose, fructose, invert sugar, glucose, high fructose corn syrup, glucose syrup, xylitol, mannitol, sorbitol and sucrose which were equisweet to the standard sucrose solution were measured by taste panels using the constant stimulus paired comparison method (Amerine, Pangborn & Roessler, "Principles of Sensory Evaluation of Food", Academic Press New York).

A series of five or more concentrations of increasing intensity were prepared for each sweetener so that the mid-concentration was approximately the same sweetness as the sucrose control. Coded samples were presented in pairs to panellists, one of the pair being one of the test solutions and the other the sucrose control. Order of presentation of the pairs was randomised and within each pair half the panellists received the standard sucrose first, half the test solution first. Panellists were asked to choose the sweeter sample. "No difference" replies were allocated half to the sucrose control, half to the test sample.

Between sample pairs a one minute rest period was enforced. Panellists were instructed to rinse with water between pairs. The % panellists chosing the test sweetener level as sweeter than the sucrose standard was plotted against the % sweetener concentration. The results were subjected to probit analysis and for each solution the test concentration was calculated at which 50% of the responses would indicate the test sweetener to be sweeter than the sucrose standard: this is taken as the equisweet point or sucrose equivalent value (SEV).

The results were as follows:

| | |
|---|---|
| Sucralose | 0.00842% |
| Fructose | 4.85% |
| 50:50 Fructose:glucose* (artificial invert sugar) | 5.84% |
| Glucose (dextrose monohydrate) | 9.67% |
| High Fructose Corn Syrup (HFCS) | 8.87% |
| Glucose Syrup (19% dextrose, 15% maltose 66% oligosaccharides, d.s.b.) | 25.26% |
| Xylitol | 5.69% |
| Mannitol | 9.66% |
| Sorbitol | 9.5% |

* 50:50 by weight Fructofin (regd) and dextrose monohydrate.

To determine the synergy of combinations of sucralose and the other sweeteners, compositions were mixed which contained a theoretical 5% SEV (based on the SEVs listed above) with an equal sweetness contribution from each sweetener. Thus, since the 5% SEV for sucralose was 0.00842% and the SEV for fructose was 4.85%, a theoretical 50:50 sweetness contribution mixture with a % SEV would contain 0.00421% sucralose and 2.425% fructose. i.e. a weight ratio of 1 to 576. This mixture was then dissolved at various concentrations and tested in the same way as described above to obtain a 5% SEV for each mixture.

The percentage saving over the theoretical amount required can then be calculated as

$$\frac{A-B}{A} \quad x \quad 100$$

or alternatively the percentage increase in sweetening power can be calculated

$$\frac{A-B}{B} \quad x \quad 100$$

where A is the concentration of one component in the blend required theoretically and B is the concentration of that component of the blend found experimentally to be necessary.

On this basis the following values were obtained for 50/50 sweetness contributions from:

1. Sucralose/fructose
SEV = 0.00316% sucralose + 1.818% fructose
saving = 25%
2. Sucralose/sucrose
SEV = 0.00415% sucralose + 2.467% sucrose
saving = 1.33%
3. Sucralose/invert sugar
SEV = 0.0035% sucralose + 2.406% invert sugar
saving = 17.6%.
4. Sucralose/dextrose monohydrate
SEV = 0.0036% sucralose + 4.18% DMH
saving = 13.5%
5. Sucralose/HFCS
SEV = 0.00375% sucralose + 3.95% HFCS
saving = 10.7%
6. Sucralose/glucose syrup
SEV = 0.00328% sucralose + 9.84% glucose syrup
saving = 22%
7. Sucralose/xylitol
SEV = 0.0038% sucralose + 2.57% xylitol
saving = 9.7%
8. Sucralose/mannitol

4

SEV = 0.0038% sucralose + 4.37% mannitol
saving = 9.5%
9. Sucralose/sorbitol
SEV = 0.00367% sucralose + 4.14% sorbitol
saving = 12.8%

| Summary of results | | |
|---|---|---|
| Sweetening Composition (weight ratio) | % saving | % increase in sweetening power * |
| Sucralose/fructose (1:576) | 25 | 33 |
| Sucralose/dmh (1:1148) | 14 | 16 |
| Sucralose/invert (1:693) | 18 | 21 |
| Sucralose/HFCS (1:1053) | 11 | 12 |
| Sucralose/glucose syrup (1:3000) | 22 | 28 |
| Sucralose/sucrose (1:594) | 1 | 1 |
| Sucralose/xylitol (1:671) | 10 | 11 |
| Sucralose/mannitol (1:1147) | 10 | 11 |
| Sucralose/sorbitol (1:1128) | 13 | 15 |

\* i.e. Sweetening power per unit weight of composition for an SEV at 5% sucrose.

Example 2

Measurement of synergy in a model soft drink formulation sweetened to the equivalent of 9.5% sucrose

Equisweet concentrations (g sweetener/100 ml) to a standard 10% invert sugar solution (sweetness equivalent to 9.5% sucrose) in 0.12% hydrated citric acid solution (pH 3.0) were measured as described in Example 1.

For these tests the carbohydrate sweetener concentration was fixed at 4.5% solids and the concentration of sucralose required to give total sweetness equivalent to the standard was determined experimentally for each combination.

Synergy between the sweeteners was measured as follows:

Synergy between sweeteners is quantified in the following way for two sweeteners A and B which are used in a blend:

| | g/100 mls |
|---|---|
| Concentration of sweetener A (used alone) required to provide sweetness of standard | $a$ |
| Concentration of sweetener B (used alone) to provide sweetness of standard | $b$ |
| Concentration of sweeteners used in the blend to provide sweetness of standard | $a' + b'$ |
| Sweetness contribution in blend from sweetener A | $\frac{a'}{a} \times 100 = A'\%$ |
| Sweetness contribution in blend from sweetener B | $\frac{b'}{b} \times 100 = B'\%$ |
| % saving (Synergy) = $100 - (A' + B')$ | |

Materials

| Sweetener | Supplier |
|---|---|
| Fructose | Geest (Fructofinn) |
| Glucose, DMH | Tunnel |
| Isosweet 45% HFCS | Tunnel |
| Flosweet Glucose Syrup | CPC |
| Globe Glucose Syrup | CPC |
| Invert Syrup N2104 | Tunnel |

| *A | B | C | D | E | F | G | H |
|---|---|---|---|---|---|---|---|
| Sucrose | 9.54 | 47.17 | 0.0202 | 0.01024 | 50.69 | 2 | 48:52 |
| Fructose | 7.73 | 58.21 | 0.0202 | 0.00470 | 23.27 | 19 | 71:29 |
| Glucose | 15.86 | 28.37 | 0.0202 | 0.01258 | 62.28 | 9 | 32:68 |
| HFCS | 10.83 | 41.55 | 0.0202 | 0.00721 | 35.69 | 23 | 54:46 |
| Invert Syrup | 10.09 | 44.60 | 0.0202 | 0.0073 | 36.14 | 19 | 55:45 |
| Flosweet | 35.40 | 12.71 | 0.0202 | 0.0123 | 60.89 | 26 | 17:83 |
| Globe | 28.78 | 15.64 | 0.0202 | 0.0155 | 76.63 | 8 | 17:83 |

*Footnote:

A = Saccharide Sweetener

B = Concentration Saccharide Sweetener (solids) when no Sucralose present g/100mls

C = Sweetness from 4.5% Saccharide Sweetener when used with Sucralose %

D = Concentration Sucralose when no Saccharide Sweetener g/100mls

E = Concentration Sucralose with 4.5% Saccharide Sweetener g/100mls

F = Sweetness from Sucralose when used with Saccharide Sweetener

G = Sweetness Saving (Synergy) %

H = Approximate Sweetness Contribution Saccharide Sweetener Sucralose

Example 3  Cola Sweetened to equivalent of 10% sucrose

| Sodium benzoate solution (10% w/v) | 0.154% |
|---|---|
| Phosphoric acid (88%) | 0.015% |
| Cola base 17.40. 1114* | 0.449% |
| Cola Flavour 15.01.6930* | 0.016% |
| Sucralose | 0.009% |
| Fructose | 3.510% |
| Carbonated water | 95.847% |

* IFF (Great Britain) Ltd

Example 4  Carbonated Lemonade sweetened to equivalent of 10%  sucrose

| Sodium benzoate solution (10% w/v) | 0.192% |
|---|---|
| Anhydrous citric acid | 0.240% |
| Lemon flavour DA 05856* | 0.096% |
| Sucralose | 0.009% |
| Fructose | 3.510% |
| Carbonated water | 95.953% |

* Naarden International

Example 5  Instant Lemon Tea sweetened to equivalent of 3.5% sucrose

| Maltodextrin 20 DE | 22.13% |
|---|---|
| Cold soluble instant tea - 932* | 9.48% |
| Malic Acid | 6.02% |
| Flavour - Lemon 9/790918** | 0.79% |
| Sucralose | 0.16% |
| Fructose | 61.42% |

\* Batchelor's Catering Services
\*\* Dragoco Ltd

Mix and pack in 20 g sachet. Dissolve sachet in 1 litre water.

Example 6-Ready to drink strawberry flavoured milk sweetened to  equivalent of 2.5% sucrose

## Ready to Drink Strawberry Milk

Skimmed milk                                              98.818%

Emulsifier – Recodan CM*                                   .200%

Colour – Ponceau 4R (E124)                                 .002%

Flavour – Strawberry E4468L**                              .100%

Sucralose                                                  .002%

Fructose                                                   .878%

(each of sucralose and fructose contributes 1.25%

sucrose equivalent).

* Grinstead Products Ltd

** Fries and Fries Ltd

Example 7 - Sweetener Composition

A sweetening composition is prepared by mixing l.26g sucralose and 727 g fructose. The resulting mixture has a sweetening power equivalent to that of 2 kg sucrose. This degree of sweetness (provided in a 50:50 share by the two components) would theoretically be provided by 1.68 g sucralose plus 970g fructose, a saving of 25%.

7

Example 8  Lemonade sweetened to the equivalent of 9.5% sucrose

|  | Fructose % | HFCS | Globe Syrup | Invert Syrup |
|---|---|---|---|---|
| Sodium benzoate solution (10% w.v) | 0.192 | 0.192 | 0.192 | 0.192 |
| Anhydrous citric acid | 0.240 | 0.240 | 0.240 | 0.240 |
| Lemon flavour DA 05856* | 0.096 | 0.096 | 0.096 | 0.096 |
| Sucralose | 0.0047 | 0.0072 | 0.0155 | 0.0073 |
| Fructose | 4.5 | - | - | - |
| HFC Syrup | - | 6.3+ | - | - |
| Globe Syrup | - | - | 5.6+ | - |
| Invert (glucose/ fructose) | - | - | - | 4.5 |
| Carbonated water | 94.9673 | 93.1648 | 93.8565 | 94.9647 |
| Synergy as saving: | 19% | 23% | 8% | 19% |

\*   Naarden International

+   4.5% solids

Example 9 - Peppermint tablet

|  | Sorbitol % w/w | Mannitol % w/w | Xylitol % w/w |
|---|---|---|---|
| Sucralose | 0.01 | 0.01 | 0.005 |
| Sorbitol [1] | 98.19 | - | - |
| Mannitol [1] | - | 98.19 | - |
| Xylitol [1] | - | - | 98.195 |
| Magnesium Stearate [2] | 1.00 | 1.00 | 1.00 |
| Peppermint Durarome [3] - sugar free 386292 | 0.80 | 0.80 | 0.80 |

1. Roquette (UK) Ltd
2. Croxton & Garry Ltd, U.K
3. Semmons Taylor Ingredients, U.K.

Example 10 - Cherry dry mix beverage

8

EP 0 313 234 B1

Each portion (sachet) contains enought to make 100 ml drink

| All amounts in grams | Fructose | DMH | Sorbitol |
|---|---|---|---|
| Anydrous citric acid | 0.18 | 0.18 | 0.18 |
| Maltodextrin (20 DE) | 0.11 | 0.11 | 0.11 |
| CMC P20P | 0.033 | 0.033 | 0.033 |
| Cherry Flavour E34955D | 0.02698 | 0.02698 | 0.02698 |
| FD & C Red No.4 (colouring) | 0.0062 | 0.0062 | 0.0062 |
| Sucralose | 0.0045 | 0.0050 | 0.0052 |
| Fructose | 3.0 | - | - |
| Dextrose monohydrate(DMH) | - | 6.88 | - |
| Sorbitol | - | - | 6.96 |
| Synergy as saving | 25% | 14% | 13% |

## Claims

1. A sweetening composition comprising sucralose and a saccharide sweetener selected from the group consisting of fructose, glucose, invert sugar, starch-derived glucose syrups, high fructose corn syrups and sugar alcohols, the relative sweetness contribution provided by the sucralose and the saccharide sweetener being from 5:1 to 1:5.

2. A sweetening composition according to Claim 1, in which the said relative sweetness contribution is from 3:1 to 1:3.

3. A sweetening composition according to Claim 2, in which the said relative sweetness contribution is about 1:1.

4. A method of sweetening an oral composition other than chewing gum comprising incorporating therein sucralose and a saccharide sweetener selected from the group consisting of fructose, glucose, invert sugar, starch derived glucose syrups, high fructose corn syrups and sugar alcohols, such that the relative sweetness contribution provided by the sucralose and the saccharide sweetener is from 5:1 to 1:5.

5. A method according to Claim 4, in which the said relative sweetness contribution is from 3:1 to 1:3.

6. A method according to Claim 5, in which the said relative sweetness contribution is about 1:1.

7. A method according to any of Claims 4 - 6 wherein the oral composition is a beverage.

8. A method according to any of Claims 4 - 7 wherein the saccharide comprises fructose.

9. A method according to any of Claims 4 - 7 wherein the saccharide comprises invert sugar, high fructose corn syrup, or glucose syrup.

10. A method according to any of Claims 4 - 7 wherein the saccharide comprises xylitol, mannitol or sorbitol.

11. An oral composition other than chewing gum sweetened with a sweetening composition according to any of Claims 1 - 3.

12. An oral composition sweetened by a method according to any of claims 4 to 10.

13. An oral composition according to claim 11 or claim 12 in the form of a beverage.

## Revendications

9

1. Une composition édulcorante comprenant du sucralose et un édulcorant au saccharide choisi dans le groupe constitué de fructose, de glucose, de sucre inverti, de sirops de glucose dérivés d'amidon, de sirops de maïs et d'alcools de sucre à teneur élevée en fructose, le rapport d'édulcoration relatif fourni par le sucralose et l'édulcorant au saccharide étant compris entre 5:1 et 1:5.

2. Une composition édulcorante selon la revendication 1, dans laquelle le dit rapport d'édulcoration relatif est compris entre 3:1 et 1:3.

3. Une composition édulcorante selon la revendication 2, dans laquelle le dit rapport d'édulcoration relatif est de l'ordre de 1:1.

4. Un procédé d'édulcoration d'une composition orale autre que le chewing-gum comprenant l'incorporation dans cette composition de sucralose et d'un édulcorant au saccharide choisi dans le groupe constitué de fructose, de glucose, de sucre inverti, de sirops de glucose dérivés d'amidon, de sirops de maïs et d'alcools de sucre à teneur élevée en fructose, de sorte que le rapport d'édulcoration relatif fourni par le sucralose et l'édulcorant au saccharide est compris entre 5:1 et 1:5.

5. Un procédé selon la revendication 4, dans lequel ledit rapport d'édulcoration relatif est compris entre 3:1 et 1:3.

6. Un procédé selon la revendication 5, dans lequel ledit rapport d'édulcoration relatif est de l'ordre de 1:1.

7. Un procédé selon l'une quelconque des revendications 4 à 6, dans lequel la composition orale est une boisson.

8. Un procédé selon l'une quelconque des revendications 4 à 7, dans lequel le saccharide comprend de la fructose.

9. Un procédé selon l'une quelconque des revendications 4 à 7, dans lequel le saccharide comprend du sucre inverti, du sirop de mais à teneur élevée en fructose ou du sirop de glucose.

10. Un procédé selon l'une quelconque des revendications 4 à 7, dans lequel le saccharide comprend du xylitol, du mannitol ou du sorbitol.

11. Une composition orale édulcorée par une composition édulcorante selon l'une quelconque des revendications 1 à 3.

12. Une composition orale édulcorée par un procédé selon l'une quelconque des revendications 4 à 10.

13. Une composition orale selon la revendication 11 ou la revendication 12, sous forme d'une boisson.

**Patentansprüche**

1. Süssstoff-Zusammensetzung, umfassend Sucralose und einen Saccharid-Süssstoff, ausgewählt aus der Gruppe, bestehend aus Fructose, Glucose, Invertzucker, Glucosesirupen, die sich von Stärke ableiten, Maissirupen mit hohem Fructosegehalt, und Zuckeralkohole, wobei der relative Süssstoffbeitrag, der durch die Sucralose und den Saccharid-Süssstoff gegeben ist, von 5:1 bis 1:5 ist.

2. Süssstoff-Zusammensetzung nach Anspruch 1, dadurch **gekennzeichnet,** dass der relative Süssstoffbeitrag von 3:1 bis 1:3 ist.

3. Süssstoff-Zusammensetzung nach Anspruch 2, dadurch **gekennzeichnet,** dass der relative Süssstoffbeitrag etwa 1:1 ist.

4. Verfahren zum Süssen einer anderen oralen Zusammensetzung als Kaugummi, **gekennzeichnet** durch Einfügen von Sucralose und einem Saccharid-Süssstoff darin, ausgewählt aus der Gruppe, bestehend aus Fructose, Glucose, Invertzucker, Glucosesirupen, die sich von Stärke ableiten, Maissirupen mit hohem Fructosegehalt, und Zuckeralkoholen, so dass der relative Süssstoffbeitrag, der durch die Sucralose und den Saccharid-Süssstoff gegeben ist, von 5:1 bis 1:5 ist.

5. Verfahren nach Anspruch 4, dadurch **gekennzeichnet,** dass der relative Süssstoffbeitrag von 3:1 bis 1:3 ist.

6. Verfahren nach Anspruch 5, dadurch **gekennzeichnet,** dass der relative Süssstoffbeitrag etwa 1:1 ist.

7. Verfahren nach einem der Ansprüche 4 bis 6, dadurch **gekennzeichnet,** dass die orale Zusammensetzung ein Getränk ist.

8. Verfahren nach einem der Ansprüche 4 bis 7, dadurch **gekennzeichnet,** dass das Saccharid Fructose umfasst.

9. Verfahren nach einem der Ansprüche 4 bis 7, dadurch **gekennzeichnet,** dass das Saccharid Invertzukker, Maissirup mit hohem Fructosegehalt, oder Glucosesirup umfasst.

10. Verfahren nach einem der Ansprüche 4 bis 7, dadurch **gekennzeichnet,** dass das Saccharid Xylit, Mannit oder Sorbit umfasst.

11. Orale Zusammensetzung, gesüsst mit einer Süssstoff-Zusammensetzung nach einem der Ansprüche 1 bis 3.

12. Orale Zusammensetzung, gesüsst durch ein Verfahren nach einem der Ansprüche 4 bis 10.

13. Orale Zusammensetzung nach Anspruch 11 oder 12 in der Form eines Getränkes.